# EUROPEAN PATENT APPLICATION

(11) **EP 2 695 755 A2**
(43) Date of publication of application: **12.02.2014**
(21) Application number: 13177950.6
(22) Date of filing: 25.07.2013
(51) Int. Cl.: B60H 1/00

(54) **Air conditioning device for vehicle**

(30) Priority: 07.08.2012 JP 2012175122
(71) Applicant: Valeo Japan Co., Ltd., Saitama 360-0193 (JP)
(72) Inventor: Omi, Hironori, Kumagaya-shi, Saitama 360-0193 (JP); Fukuhara, Hisanaga, Kumagaya-shi, Saitama 360-0193 (JP)
(74) Representative: Fauré, Marion-Laurie

(57) **Abstract**

The air conditioning device includes a blower unit 2 which houses a blower 21 in the inside of a scroll casing 23, and an air conditioning unit 3 which houses a heat exchanger for cooling 33 in the inside of an air conditioning casing 31, the scroll casing 23 has an air blowoff port 60 through which air supplied from the blower 21 is blown off, the air conditioning casing 31 includes an air intake port 50 through which air blown off from the blower unit 2 is taken into the air conditioning casing 31, the air blowoff port 60 is opened toward an air conditioning casing 31 side, the air intake port 50 is opened toward an upper side of the vehicle, a lower end of the air blowoff port 60 is disposed more downward in the vertical direction of the vehicle than the air intake port 50, and the air intake port 60 and the blowoff port 50 are connected to each other by a duct 70. The duct 70 is provided with an air flow direction changing portion 74 which includes a curved portion 741, and a first flow straightening guide 742 and second flow straightening guides 743a, 743b, 743c, 743d which are arranged in the inside of the curved portion 741.

## Description

### Field of the Invention

The present invention relates to an air conditioning device for a vehicle where a blower unit which houses a blower in the inside of a scroll casing and an air conditioning unit which houses a heat exchanger in the inside of an air conditioning casing are provided as separate units from each other.

### Background of the Invention

As an air conditioning device for a vehicle which is arranged on a front side of the vehicle in the advancing direction of the vehicle, for example, as shown in JP-A-2000-6642, there has been known an air conditioning unit of a horizontal installation type where a blower unit which houses a blower in the inside of a scroll casing and an air conditioning unit which houses a heat exchanger in the inside of an air conditioning casing are arranged parallel to each other in the lateral direction of the vehicle. In such an air conditioning unit of a horizontal installation type, the blower unit and the air conditioning unit are arranged parallel to each other in the lateral direction of the vehicle and hence, the air conditioning unit has an advantage that the size of the air conditioning unit in the vertical direction can be shortened.

Further, for example, as shown in JP-A-2001-150923, there has been known an air conditioning device for an automobile of a vertical installation type where a blower unit and an air conditioning unit are integrally formed with each other, and a blower is arranged above a heat exchanger for cooling in the vertical direction of the vehicle. In such an air conditioning device of a vertical installation type, the blower unit and the air conditioning unit are arranged parallel to each other in the vertical direction of the vehicle and hence, the air conditioning unit has an advantage that respective sizes of the air conditioning unit in the lateral direction as well as in the longitudinal direction can be shortened.

### Summary of the Invention

There has been a demand for an air conditioning device for a vehicle capable of coping with various layouts by freely changing a position of a blower unit with respect to an air conditioning unit. In this case, it is desirable that the constitution of the air conditioning unit not be changed corresponding to the layout even when there are various layouts. By not changing the constitution of the air conditioning unit, a manufacturing cost of the air conditioning device for a vehicle can be reduced.

However, in the air conditioning device for an automobile of a vertical installation type disclosed in JP-A-2001-150923 or the like, the blower unit and the air conditioning unit are integrally formed with each other and hence, the relative position of the blower unit with respect to the air conditioning unit cannot be changed from the arrangement in the vertical direction of the vehicle to the arrangement in the lateral direction or in the longitudinal direction of the vehicle.

In the air conditioning device of a lateral installation type disclosed in JP-A-2000-6642 or the like, although the blower unit and the air conditioning unit are formed as separate units from each other, the blower unit cannot be connected to the air conditioning unit in the directions of the vehicle other than in the lateral direction of the vehicle. Accordingly, the position of the blower unit with respect to the air conditioning unit cannot be freely changed.

Accordingly, it is an object of the present invention to provide an air conditioning device for a vehicle where a blower unit and an air conditioning unit are provided as separate units from each other, wherein the blower unit and the air conditioning unit can be connected to each other even when the position of the blower unit is arranged either in the lateral direction of the vehicle or on a front side in the advancing direction of the vehicle with respect to the air conditioning unit so that the air conditioning unit can be used in common in both arrangements. It is another object of the present invention to provide such an air conditioning device for a vehicle with the additional rational structure.

The air conditioning device for a vehicle according to the present invention includes: a blower unit which houses a blower in the inside of a scroll casing; and an air conditioning unit which houses a heat exchanger in the inside of an air conditioning casing, the scroll casing having an air blowoff port through which air supplied from the blower is blown off, and the air conditioning casing having an air intake port through which air blown off from the blower unit is taken into the air conditioning casing, wherein the air blowoff port is opened toward an air conditioning casing side, the air intake port is opened toward an upper side of the vehicle, and the air intake port and the air blowoff port are connected to each other by a duct (Claim 1). Here, the heat exchanger is a heat exchanger for cooling such as an evaporator, for example.

Due to such a constitution, the air intake port of the air conditioning casing is opened toward the upper side of the vehicle and hence, even when there is a request that the blower unit be arranged not only above the air conditioning unit but also on a right side of the air conditioning unit, on a left side of the air conditioning unit or on a front side of the air conditioning unit, the air conditioning unit can be used in common.

Further, the air intake port and the air blowoff port are connected to each other by the duct and hence, it is possible to constitute the air conditioning device for a vehicle even when the blower unit is arranged on a right side, on a left side or on a front side with respect to the air conditioning unit.

The air conditioning device for a vehicle according to the present invention is **characterized in that** a lower end of the air blowoff port is disposed more downward in the vertical direction of the vehicle than the air intake port (Claim 2).

Due to such a constitution, the lower end of the air blowoff port which is opened toward an air conditioning casing side is disposed more downward in the vertical direction of the vehicle than the air intake port and hence, the blower unit is arranged on one side in the lateral direction of the vehicle or on a front side in the advancing direction of the vehicle with respect to the air conditioning unit. Further, the increase in the size of the air conditioning device for a vehicle in the vertical direction can be suppressed.

The air conditioning device for a vehicle according to the present invention is **characterized in that** the duct includes: a blower unit side connecting portion which is connected to the air blowoff port; an air conditioning unit side connecting portion which is connected to the air intake port; and an air flow direction changing portion which is arranged between the blower unit side connecting portion and the air conditioning unit side connecting portion, wherein the air flow direction changing portion includes a curved portion formed of a curved cylindrical body and a flow straightening guide which is arranged in the inside of the curved portion (Claim 3).

Due to such a constitution, the duct has the air flow direction changing portion which is arranged between the blower unit side connecting portion and the air conditioning unit side connecting portion and hence, it is possible to smoothly introduce air which is blown off from the air blowoff port having a lower end thereof disposed more downward in the vertical direction of the vehicle than the air intake port into the air intake port.

Further, the air flow direction changing portion includes the curved portion formed of the curved cylindrical body and the flow straightening guide which is arranged in the inside of the curved portion and hence, the distribution of the air velocity of the air which reaches the air intake port can be made uniform.

The air conditioning device for a vehicle according to the present invention is **characterized in that** the flow straightening guide includes a first flow straightening guide which extends toward the air conditioning unit side connecting portion from a curved outer peripheral side of the curved portion (Claim 4)

Due to such a constitution, the first flow straightening guide extends from the curved outer peripheral side of the curved portion and hence, the flow straightening guide can be arranged at a portion in the inside of the curved portion where the flow of air is most concentrated and thereby the first flow straightening guide is effective for making the distribution of the air velocity of the air which reaches the air intake port uniform. Further, the first flow straightening guide extends toward the air conditioning unit side connecting portion and hence, the first flow straightening guide is arranged along the flow of air toward the air intake port. Accordingly, the direction of the flow of air deflected toward an inner wall of the curved portion can be changed into the direction toward the center of the curved portion without excessively increasing ventilation resistance.

The air conditioning device for a vehicle according to the present invention is also **characterized in that** the flow straightening guide has a second flow straightening guide which extends along a bent shape of the curved portion (Claim 5).

Due to such a constitution, the flow straightening guide includes the second flow straightening guide which extends along the bent shape of the curved portion and hence, the direction of the flow of air can be changed in conformity with a curvature of the curved portion and thereby the distribution of the air velocity of the air which reaches the air intake port can be made uniform.

The air conditioning device for a vehicle according to the present invention is **characterized in that** the scroll casing has a water discharge port for discharging water which enters the inside of the scroll casing, the air conditioning casing has a water intake port which takes in water discharged from the water discharge port, and the water intake port is disposed more downward in the vertical direction of the vehicle than the water discharge port, and the water discharge port and the water intake port are connected to each other through a tubular member (Claim 6).

Due to such a constitution, the water discharge port and the water intake port which is disposed more downward in the vertical direction of the vehicle than the water discharge port are connected to each other through the tubular member and hence, water which enters the inside of the scroll casing can be fed to the inside of the air conditioning unit from the water discharge port through the tubular member, and can be discharged from the air conditioning unit.

As has been described above, according to the inventions described in Claim 1 to Claim 6, the air intake port of the air conditioning casing is opened toward the upper side of the vehicle and hence, even when there is a request that the blower unit be arranged not only above the air conditioning unit but also on a right side of the air conditioning unit, on a left side of the air conditioning unit or on a front side of the air conditioning unit, the air conditioning unit can be used in common and thereby a manufacturing cost of the air conditioning device for a vehicle can be reduced. Further, the air intake port and the air blowoff port are connected to each other by the duct and hence, it is possible to constitute the air conditioning device for a vehicle even when the blower unit is arranged on a right side, on a left side or on a front side with respect to the air conditioning unit and thereby, even when there are various layouts in mounting the air conditioning device for a vehicle on the vehicle, the air conditioning device for a vehicle can cope with such layouts.

Further, according to the inventions described in Claim 2 to Claim 6, it is possible to provide the more rational structure in the air conditioning device for a vehicle described in Claim 1.

Particularly, according to the invention described in Claim 2, the lower end of the air blowoff port which is opened toward an air conditioning casing side is disposed more downward in the vertical direction of the vehicle than the air intake port of the air conditioning unit and hence, the blower unit is arranged on one side in the lateral direction of the vehicle or on a front side in the advancing direction of the vehicle with respect to the air conditioning unit. Further, the air conditioning device for a vehicle can be mounted also on a vehicle which has a short mounting space in the vertical direction of the vehicle.

Particularly, according to the invention described in Claim 3, the duct has the air flow direction changing portion which is arranged between the blower unit side connecting portion and the air conditioning unit side connecting portion and hence, it is possible to smoothly introduce air which is blown off from the air blowoff port having a lower end thereof disposed more downward in the vertical direction of the vehicle than the air intake port into the air intake port. To be more specific, the air flow direction changing portion includes the curved portion formed of the curved cylindrical body and the flow straightening guide which is arranged in the inside of the curved portion and hence, the flow of air which flows into the duct can be straightened by the flow straightening guide and thereby the distribution of the air velocity of the air which reaches the air intake port can be made uniform.

Particularly, according to the invention described in Claim 4, the first flow straightening guide extends from the curved outer peripheral side of the curved portion and hence, the flow straightening guide can be arranged at a portion in the inside of the curved portion where the flow of air is most concentrated and thereby the first flow straightening guide is effective for making the distribution of the air velocity of the air which reaches the air intake port uniform. Further, the first flow straightening guide extends toward the air conditioning unit side connecting portion and hence, the first flow straightening guide is arranged along the flow of air toward the air intake port. Accordingly, the direction of the flow of air deflected toward an inner wall of the curved portion can be changed in the direction toward the center of the curved portion without excessively increasing ventilation resistance.

Particularly, according to the invention described in Claim 5, the flow straightening guide includes the second flow straightening guide which extends along the bent shape of the curved portion and hence, the direction of the flow of air can be changed in conformity with a curvature of the curved portion and thereby the distribution of the air velocity of the air which reaches the air intake port can be made uniform.

Particularly, according to the invention described in Claim 6, the water discharge port and the water intake port which is disposed more downward in the vertical direction of the vehicle than the water discharge port are connected to each other through the tubular member and hence, water which enters the inside of the scroll casing can be fed to the inside of the air conditioning unit from the water discharge port through the tubular member and can be discharged from the air conditioning unit. Accordingly, the water discharge performance from the scroll casing can be also enhanced.

### Brief description of the drawings

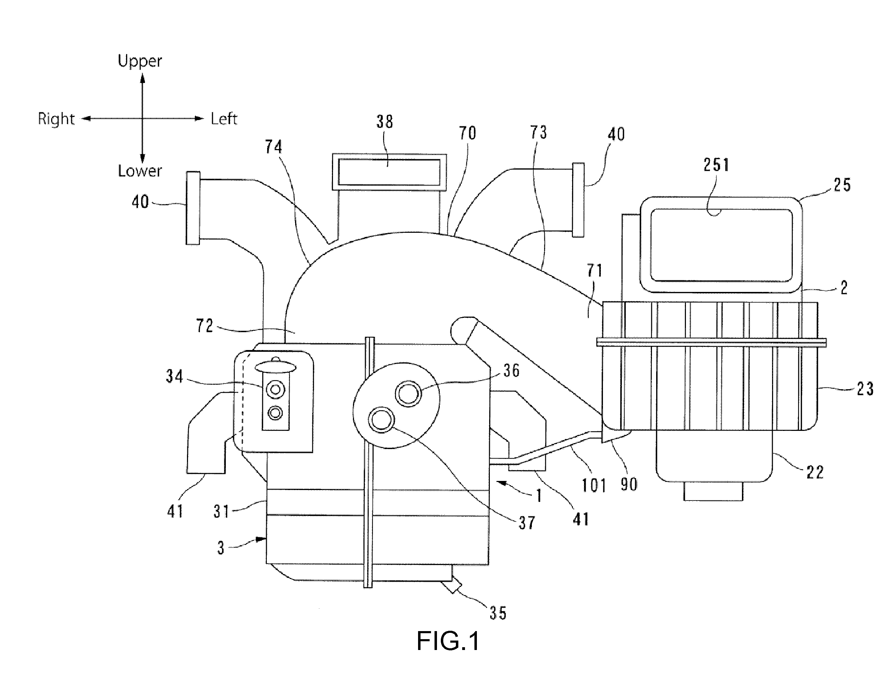

Fig. 1 is a schematic view showing the constitution of an embodiment 1 of an air conditioning device for a vehicle according to the present invention as viewed from a front side of the vehicle. To be more specific, Fig. 1 is a schematic view of the air conditioning device for a vehicle in a state where a blower unit is arranged on a left side of an air conditioning unit in the lateral direction of the vehicle and an air intake port of the air conditioning unit and an air blowoff port of the blower unit are connected to each other by a duct.

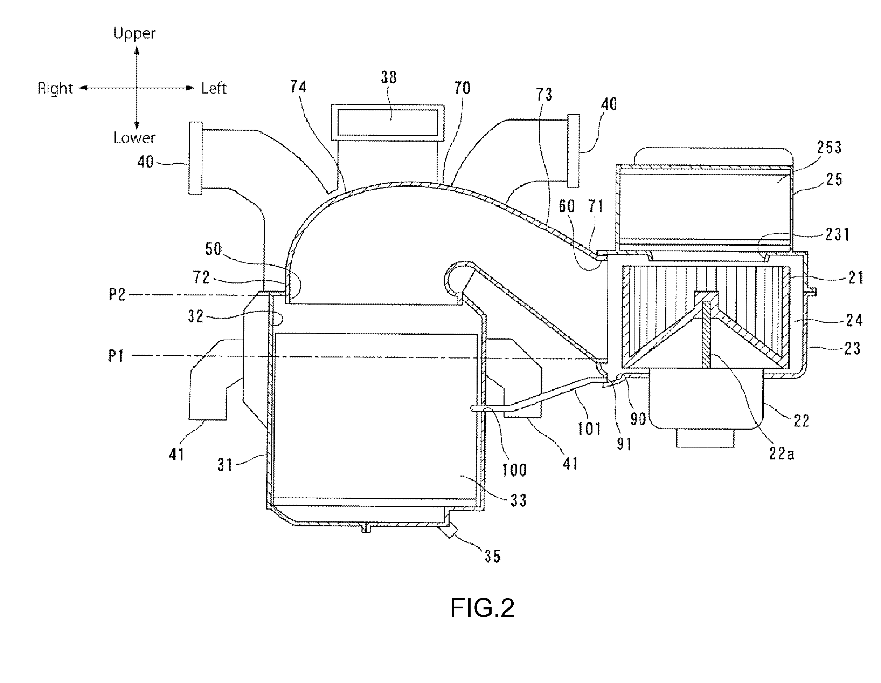

Fig. 2 is a cross-sectional schematic view of the air conditioning device for a vehicle shown in Fig. 1.

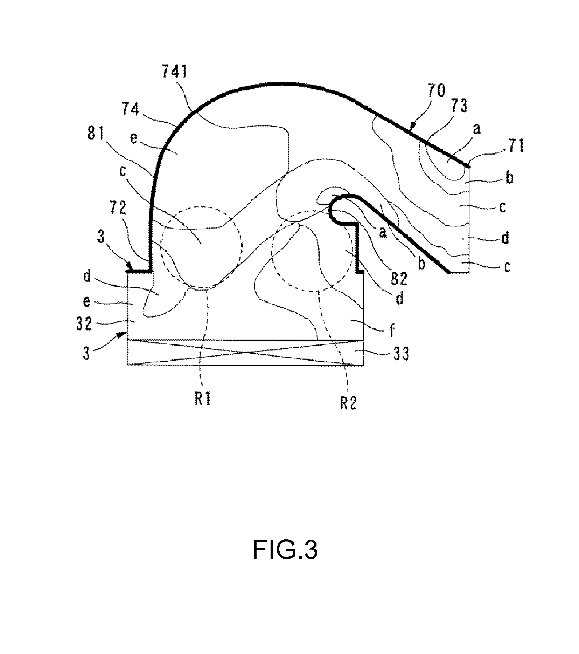

Fig. 3 is an air velocity distribution view showing the air velocity distribution of air in a range from the duct to a portion of the air conditioning unit upstream of a heat exchanger shown in Fig. 1 in a state where the duct is not provided with a flow straightening guide.

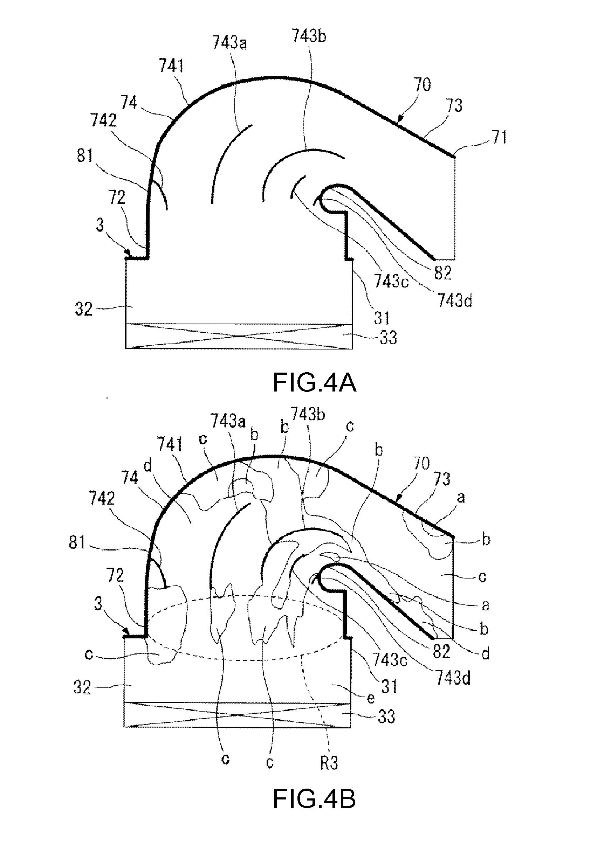

Fig. 4A is a schematic view showing a constitutional example of the air conditioning device for a vehicle shown in Fig. 1 where the air conditioning unit includes flow straightening guides, and Fig. 4B is an air velocity distribution view showing the air velocity distribution of air in a range from the duct to a portion of the air conditioning unit upstream of a heat exchanger in a state where the duct is provided with the flow straightening guides as shown in Fig. 4A.

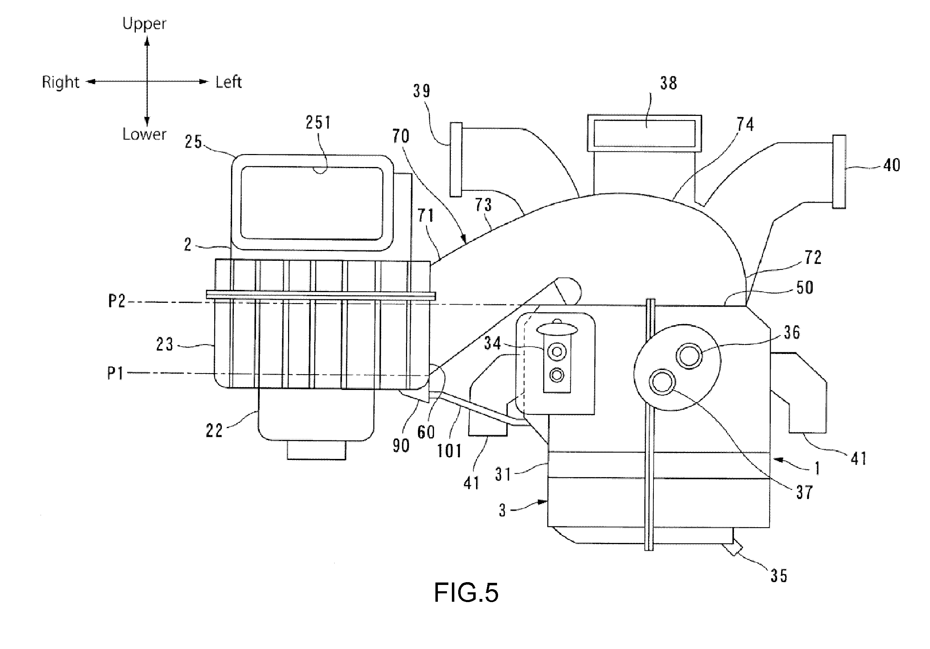

Fig. 5 is a schematic view of the constitution of an embodiment 2 of the air conditioning device for a vehicle according to the present invention as viewed from a front side of the vehicle. To be more specific, Fig. 5 is a schematic view of the air conditioning device for a vehicle in a state where a blower unit is arranged on a right side of an air conditioning unit in the lateral direction of the vehicle, and an air intake port of the air conditioning unit and an air blowoff port of the blower unit are connected to each other by a duct.

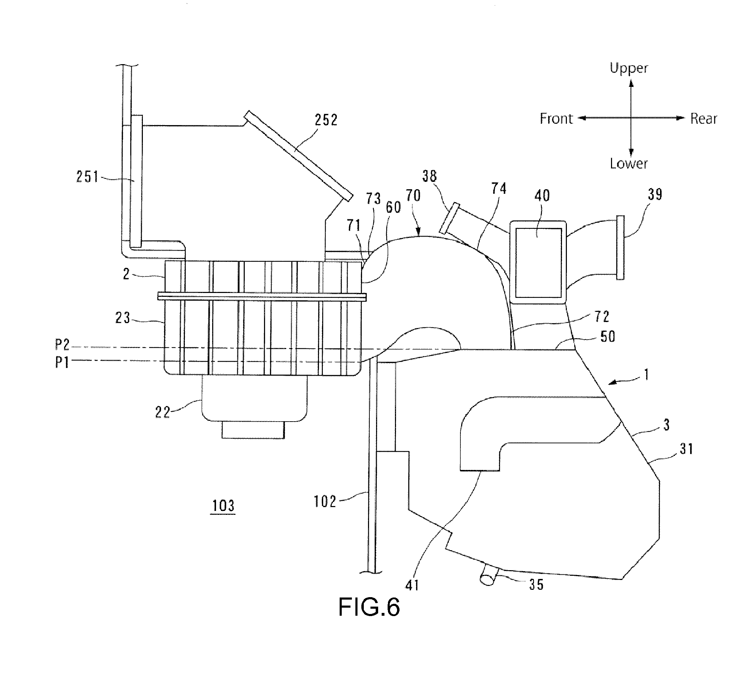

Fig. 6 is a schematic view of the constitution of a third embodiment of the air conditioning device for a vehicle according to the present invention as viewed from a left side of the vehicle. To be more specific, Fig. 6 is a schematic view of the air conditioning device for a vehicle in a state where a blower unit is arranged in front of an air conditioning unit in the longitudinal direction of the vehicle, and an air intake port of the air conditioning unit and an air blowoff port of the blower unit are connected to each other by a duct.

### Detailed description of a preferential embodiment

Hereinafter, embodiments of the present invention are explained in conjunction with attached drawings.

Fig. 1 to Fig. 4 show an air conditioning device for a vehicle 1 according to an embodiment 1 of the present invention, Fig. 5 shows an air conditioning device for a vehicle 1 according to an embodiment 2 of the present invention, and Fig. 6 shows an air conditioning device for a vehicle 1 according to an embodiment 3 of the present invention.

Each one of these air conditioning devices for a vehicle 1 includes a blower unit 2 and an air conditioning unit 3. Hereinafter, the constitution common to the embodiments 1 to 3 with respect to the blower unit 2 is explained in conjunction with Fig. 1, Fig. 2, Fig. 5 and Fig. 6.

As shown in Fig. 2, the blower unit 2 includes a blower 21, a motor 22 which rotatably drives the blower 21, and a scroll casing 23. The blower 21 is, for example, a centrifugal fan where a large number of blade portions are arranged circumferentially. As shown in Fig. 2, the blower 21 is housed in the inside of the scroll casing 23 in a state where a rotary shaft 22a of the motor 22 extends along the vertical direction of the vehicle, and a scroll-shaped air passage 24 is formed between the blower 21 and an inner surface of the scroll casing 23. As shown in Fig. 2, a bell-mouth-shaped intake port 231 is formed in the scroll casing 23 on a side opposite to the motor 22.

An intake box 25 is arranged above the intake port 231 of the scroll casing 23 in the vertical direction of the vehicle. In the intake box 25, an outside air introducing port 251 for introducing outside air from the outside of the vehicle is opened as shown in Fig. 1, Fig. 5 and Fig. 6, and an inside air introducing port 252 for introducing inside air from the inside of a cabin is opened as shown in Fig. 6. As shown in Fig. 2, in the inside of the intake box 25, an inside and outside air switching door 253 for opening or closing the outside air introducing port 251 and the inside air introducing port 252 as desired is housed.

As described later, the air conditioning unit 3 is used in common in the embodiment 1 to the embodiment 3, and the air conditioning unit 3 is explained in conjunction with Fig. 1, Fig. 2, Fig. 5 and Fig. 6.

As shown in Fig. 2, the air conditioning unit 3 is configured such that an air passage 32 is formed in the inside of an air conditioning casing 31. As shown in Fig. 2, a heat exchanger for cooling 33 such as an evaporator is arranged on a relatively upstream side of the air passage 32. The heat exchanger for cooling 33 is arranged in such a state where the heat exchanger for cooling 33 covers a flow passage of the air passage 32, and air which passes through the air passage 32 passes through the heat exchanger for cooling 33.

The heat exchanger for cooling 33 is connected to a compressor not shown in the drawing, an expansion valve 34 shown in Fig. 1 and Fig. 5 and the like by piping as required thus constituting a refrigerating cycle. The heat exchanger for cooling 33 cools air or dehumidifies air which passes through the heat exchanger for cooling 33 by performing a heat exchange between a refrigerant which passes through the refrigerating cycle and air which passes through the heat exchanger for cooling 33. A drain water discharge portion 35 for discharging drain water which is generated when the heat exchange is performed between the refrigerant and air to the outside is arranged below the air conditioning casing 31 in the vertical direction of the vehicle.

In the air passage 32, downstream of the heat exchanger for cooling 33, a heat exchanger for heating such as a heater core(not shown in the drawing) is arranged with a predetermined distance between the heat exchanger for cooling 33 and the heat exchanger for heating. The heat exchanger for heating is provided for heating air which is cooled or dehumidified by passing through the heat exchanger for cooling 33, and is also capable of reheating air which is cooled by the heat exchanger for cooling 33. As shown in Fig. 1 and Fig. 5, the heat exchanger for heating is formed of a hot-water-type heater core which is connected to an engine of the vehicle through pipes 36, 37 and uses cooling water for the engine of the vehicle. As a matter of course, the heat exchanger for heating may be formed of a heat radiator which uses a high-temperature refrigerant which is compressed by a compressor, a PTC heater which uses electric power or the like.

Although not shown in the drawing, the air passage 32 includes a cold air passage through which air (cold air) which bypasses the heat exchanger for heating flows, and a hot air passage through which air (hot air) which passes through the heat exchanger for heating flows.

In the air passage 32, an air mixing door (not shown in the drawing) for adjusting an air volume ratio between air which flows into the cold air passage and air which flows into the hot air passage is arranged. The air mixing door is arranged at a point where the cold air passage and the hot air passage merge with each other, and is rotatable about a rotary shaft ranging from a position where a ratio of air which flows into the cold air passage is set to zero by closing the cold air passage to a position where a ratio of air which flows into the hot air passage is set to zero by closing an upstream side of the heat exchanger for heating.

As a matter of course, the air passage 32 may be configured such that only the heat exchanger for cooling 33 is arranged in the air passage 32 or only the heat exchanger for heating is arranged in the air passage 32.

The air passage 32 also includes a defrost opening portion 38, a center vent opening portion 39, a side vent opening portion 40, and a foot opening portion 41 on a most downstream side thereof, that is, downstream of the heat exchanger for heating. The center vent opening portion 39 is hidden by the defrost opening portion 38 in Fig. 1, Fig. 2, and Fig. 5, while the center vent opening portion 39 is shown in Fig. 6.

As shown in Fig. 2, the air conditioning unit 3 is configured such that an air intake port 50 for taking in air fed from the blower unit 2 is opened in the air conditioning casing 31 toward an upper side of the vehicle. The air intake port 50 is opened so as to feed air to a portion of the air passage 32 upstream of the heat exchanger for cooling 33.

The mode of connecting the air conditioning unit 3 having such a constitution and each blower unit 2 to each other is explained hereinafter in conjunction with the embodiment 1, the embodiment 2 and the embodiment 3 while showing the difference in opening position of an air blowoff port 60 of the blower unit 2 among these embodiments 1 to 3.

### [Embodiment 1]

In the embodiment 1, the blower unit 2 is arranged on a left side in the lateral direction of the vehicle with respect to the air conditioning unit 3 which is arranged at the center in the lateral direction of the vehicle so as to cope with a right-handle vehicle. In conformity with such an arrangement, the air blowoff port 60 of the blower unit 2 arranged on a most downstream side of the air passage 24 is opened toward an air conditioning unit 3 side, that is, toward a right side in the lateral direction of the vehicle. Further, the blower unit 2 is arranged such that symbol P1 indicating a lower end of the air blowoff port 60 positioned on a lower side in the vertical direction of the vehicle is disposed more downward in the vertical direction of the vehicle than symbol P2 indicating the position of an opening of the air intake port 50 of the air conditioning unit 3.

The air blow off port 60 of the blower unit 2 and the air intake port 50 of the air conditioning unit 3 are connected to each other by a duct 70. The duct 70 includes a blower unit side connecting portion 71 which is connected to the air blowoff port 60 of the blower unit 2 and an air conditioning unit side connecting portion 72 which is connected to the air intake port 50 of the air conditioning unit 3. The duct 70 also includes, between the blower unit side connecting portion 71 and the air conditioning unit side connecting portion 72, an ascending portion 73 which extends toward an upper side of the vehicle gradually as the ascending portion 73 extends from an air blowoff port 60 side to an air conditioning unit 3 side, and an air flow direction changing portion 74 for directing the flow of air which has passed through the ascending portion 73 to a lower side of the vehicle.

As shown in Fig. 3 and Fig. 4, the air flow direction changing portion 74 includes a curved portion 741 which is formed of a curved cylindrical body, and also includes a first flow straightening guide 742 and second flow straightening guides 743 which are arranged in the inside of the curved portion 741 (in this embodiment, four second flow straightening guides 743a, 743b, 743c, 743d).

As shown in Fig. 3 and Fig. 4, the curved portion 741 is bent toward the air intake port 50 at an angle smaller than 90 degrees with respect to the extending direction of the ascending portion 73 from the air blowoff port 60, and the curved portion 741 includes a wall surface (a curved wall surface on an outer peripheral side) 81 on a side opposite to the blower unit 2 side, a wall surface (a curved wall surface on an inner peripheral side) 82 on a blower unit 2 side, a wall surface on a front side in the longitudinal direction of the vehicle (not shown in the drawing), and a wall surface on a rear side in the longitudinal direction of the vehicle (not shown in the drawing).

As shown in Fig. 4, the first flow straightening guide 742 is provided such that the first flow straightening guide 742 extends from a portion of the curved portion 741 where the curve of the curved portion 741 on an air intake port 50 side terminates or from the wall surface 81 in the vicinity of such a portion, and is formed in an arcuate shape such that the first flow straightening guide 742 gradually extends toward the air conditioning unit side connecting portion 72 while gradually moving away from the wall surface 81. In the present invention, the first flow straightening guide 742 extends also along the advancing direction of the vehicle with respect to the duct 70. For example, the first flow straightening guide 742 extends from an inner surface of the wall surface on a front side in the longitudinal direction of the vehicle to an inner surface of the wall surface on a rear side in the longitudinal direction of the vehicle. That is, in the present invention, the first flow straightening guide 742 has a curved surface shape.

As shown in Fig. 4, the second flow straightening guides 743a, 743b, 743c, 743d extend along a bent shape of the curved portion 741. In the present invention, while the second flow straightening guides 743a, 743b, 743c are arranged away from the wall surface 81 and the wall surface 82, the second flow straightening guide 743d has a proximal end side thereof abutted onto the wall surface 82. The second flow straightening guides 743a, 743b, 743c, 743d also extend along the advancing direction of the vehicle with respect to the duct 70. For example, the second low straightening guides 743a, 743b, 743c, 743d extend from the inner surface of the wall surface on a front side in the longitudinal direction of the vehicle to the inner surface of the wall surface on a rear side in the longitudinal direction of the vehicle. That is, in the present invention, the second flow straightening guides 743a, 743b, 743c, 743d also have a curved surface shape.

As a matter of course, the duct 70, including the first flow straightening guide 742 and the second flow straightening guides 743a, 743b, 743c, 743d mounted in the inside of the duct 70, is made of a resin material. The duct 70 may be constituted by engaging a semicircular cylindrical portion which constitutes a front side of the duct 70 in the longitudinal direction of the vehicle including the wall portion and a semicircular cylindrical portion which constitutes a rear side of the duct 70 in the longitudinal direction of the vehicle including the wall portion with each other by fitting.

In this manner, the air flow direction changing portion 74 has the curved portion 741, and includes the first flow straightening guide 742 and the second flow straightening guides 743a, 743b, 743c, 743d in the inside of the curved portion 741. Accordingly, the air flow direction changing portion 74 can smoothly introduce air blown off from the air blowoff port 60 having the lower end thereof disposed more downward in the vertical direction of the vehicle than the air intake port 50 into the air intake port 50. Further, the distribution of the air velocity of the air which is fed to the air intake port 50 from the duct 70 can be made uniform by the first flow straightening guide 742 and the second flow straightening guides 743a, 743b, 743c, 743d.

That is, with respect to air regions, references are set in six stages ranging from an air region a to an air region f, wherein the air region where air velocity is the highest is set as the air region a, the air region where the air velocity is the lowest is set as the air region f, and the air region b, the air region c, the air region d, and the air region e are set between the air region a and the air region f in air velocity decreasing order. Next, assume the air flow direction changing portion 74 which, as shown in Fig. 3, includes only the curved portion 741, and includes neither the first flow straightening guide 742 nor the second flow straightening guides 743a, 743b, 743c, 743d. When the investigation is made with respect to air velocity in the air flow direction changing portion 74 having such constitution, the air region c occupies most of a circular-shaped region R1 of the air intake port 50 on a wall surface 81 side, while the air regions d, f occupy most of a circular-shaped region R2 of the air intake port 50 on a wall surface 82 side. That is, air velocity is high in the circular-shaped region R1 on the wall surface 81 side of the air intake port 50, and air velocity is low in the circular-shaped region R2 on the wall surface 82 side of the air intake port 50 thus generating irregularity in distribution of air velocity.

To the contrary, when the investigation is made with respect to air velocity in the air flow direction changing portion 74 having the constitution where, with respect to the air regions, references are set in six stages ranging from the air region a to the air region f in the same manner as described above and, as shown in Fig. 4, the air flow direction changing portion 74 includes the curved portion 741, and the first flow straightening guide 742 and the second flow straightening guides 743a, 743b, 743c, 743d which are arranged in the inside of the curved portion 741, the air region c or the air region d occupies an area of the air intake port 50 on the wall surface 81 side and an area of the air intake port 50 on the wall surface 82 side in an elliptical-shaped region R3 ranging from the wall surface 81 side to the wall surface 82 side so that there is no large irregularity in distribution of air velocity whereby the distribution of air velocity is made approximately uniform.

Further, as shown in Fig. 2, in the blower unit 2, a stripe-shaped groove portion 90 is formed on a more downward side of the vehicle than a lower edge of the air blowoff port 60 of the scroll casing 23. On an air conditioning unit 3 side of the groove portion 90, a through-hole-shaped water discharge port 91 is formed. Further, a through-hole-shaped water intake port 100 which is communicated with the air passage 32 is formed in a blower-unit-2-side surface of the air conditioning casing 31 of the air conditioning unit 3 at a position upstream of the heat exchanger for cooling 33. Further, one end of a tubular member 101 is connected to the water discharge port 91, and the other end of the tubular member 101 is connected to the water intake port 100. The tubular member 101 is formed of a rubber hose or the like, for example.

Due to such a constitution, water which enters the inside of the scroll casing 23 can be fed to the inside of the air conditioning unit 3 from the water discharge port 91 through the tubular member 101 and can be discharged from the drain water discharge portion 35.

### [Embodiment 2]

In the embodiment 2, as shown in Fig. 5, a blower unit 2 is arranged on a right side in the lateral direction of the vehicle with respect to an air conditioning unit 3 which is arranged at the center in the lateral direction of the vehicle so as to cope with a right-handle vehicle. In conformity with such an arrangement, an air blowoff port 60 of the blower unit 2 arranged on a most downstream side of an air passage 24 is opened toward an air conditioning unit 3 side, that is, toward a left side in the lateral direction of the vehicle. Also in the embodiment 2, as shown in Fig. 5, the blower unit 2 is arranged such that symbol P1 indicating a lower end of the air blowoff port 60 positioned on a more downward side of the vehicle is disposed more downward in the vertical direction of the vehicle than symbol P2 indicating a position of an opening of an air intake port 50 of the air conditioning unit 3.

Also in the embodiment 2, as shown in Fig. 5, a duct 70 which connects the air blowoff port 60 of the blower unit 2 and the air intake port 50 of the air conditioning unit 3 to each other includes a blower unit side connecting portion 71, an air conditioning unit side connecting portion 72, an ascending portion 73, and an air flow direction changing portion 74. A shape of the duct 70 is in mirror symmetry with the shape of the duct 70 in the embodiment 1.

Although not shown in the drawing, in the same manner as the embodiment 1, the air flow direction changing portion 74 is constituted of a curved portion 741, and a first flow straightening guide 742 and second flow straightening guides 743 which are arranged in the inside of the curved portion 741. The shapes and the arrangement of the first flow straightening guide 742 and the second flow straightening guides 743 are obtained by inverting the shapes and the arrangement of the first flow straightening guide 742 and the second flow straightening guides 743 shown in Fig. 4 in the lateral direction.

Due to such a constitution, the air flow direction changing portion 74 includes the curved portion 741, and also includes the first flow straightening guide 742 and the second flow straightening guides 743a, 743b, 743c, 743d in the inside of the curved portion 741 and hence, air which is blown off from the air blowoff port 60 having a lower end thereof disposed more downward in the vertical direction of the vehicle than the air intake port 50 can be smoothly introduced into the air intake port 50. Further, the distribution of the air velocity of the air which is fed to the air intake port 50 from the duct 70 can be made uniform by the first flow straightening guide 742 and the second flow straightening guides 743a, 743b, 743c, 743d.

Also in this embodiment 2, as shown in Fig. 5, one end of a tubular member 101 is connected to a water discharge port 91, and the other end of the tubular member 101 is connected to a water intake port 100. Accordingly, water which enters the inside of the scroll casing 23 can be fed to the inside of the air conditioning unit 3 from the water discharge port 91 through the tubular member 101 and can be discharged from the drain water discharge portion 35.

### [Embodiment 3]

The embodiment 3 can cope with a case where, as shown in Fig. 6, to make an air conditioning device for a vehicle available to both a left-hand drive vehicle and a right-hand drive vehicle, a blower unit 2 is arranged on an engine room 103 side of a vehicle beyond a partition portion 102 which partitions a cabin and an engine room of the vehicle from each other. In conformity with such an arrangement, an air blowoff port 60 of the blower unit 2 arranged on a most downstream side of an air passage 24 is opened toward an air conditioning unit 3 side, that is, toward a rear side in the advancing direction of the vehicle. Further, also in the embodiment 3, as shown in Fig. 6, the blower unit 2 is arranged such that symbol P1 indicating a lower end of the air blowoff port 60 positioned on a lower side in the vertical direction of the vehicle is disposed more downward in the vertical direction of the vehicle than symbol P2 indicating a position of an opening of an air intake port 50 of the air conditioning unit 3.

Further, also in the embodiment 3, as shown in Fig. 6, a duct 70 which connects the air blowoff port 60 of the blower unit 2 and the air intake port 50 of the air conditioning unit 3 to each other includes a blower unit side connecting portion 71, an air conditioning unit side connecting portion 72, an ascending portion 73, and an air flow direction changing portion 74. Although not shown in the drawing, the air flow direction changing portion 74 is constituted of a curved portion 741, and a first flow straightening guide 742 and second flow straightening guides 743 which are arranged in the inside of the curved portion 741.

Due to such a constitution, the air flow direction changing portion 74 includes the curved portion 741, and the air flow direction changing portion 74 also includes the first flow straightening guide 742 and the second flow straightening guides 743a, 743b, 743c, 743d in the inside of the curved portion 741 and hence, air which is blown off from the air blowoff port 60 having a lower end thereof disposed more downward in the vertical direction of the vehicle than the air intake port 50 can be smoothly introduced into the air intake port 50. Further, the distribution of the air velocity of the air which is fed to the air intake port 50 from the duct 70 can be made uniform by the first flow straightening guide 742 and the second flow straightening guides 743a, 743b, 743c, 743d.

To recapitulate the above-mentioned embodiment 1, the embodiment 2 and the embodiment 3 in a comprehensive manner, the blower unit 2 can be arranged on a right side in the lateral direction of the vehicle, a left side in the lateral direction of the vehicle, and a front side in the longitudinal direction of the vehicle respectively with respect to the air conditioning unit 3 while using the air conditioning unit in common and hence, the present invention can cope with various layouts in mounting the air conditioning device for a vehicle 1 on the vehicle.

### Reference Signs List

1: air conditioning device for vehicle
2: blower unit
21: blower
23: scroll casing
3: air conditioning unit
31: air conditioning casing
33: heat exchanger for cooling
50: air intake port
60: air blowoff port
70: duct
71: blower unit side connecting portion
72: air conditioning unit side connecting portion
74: air flow direction changing portion
741: curved portion
742: first flow straightening guide
743(743a∼743d): second flow straightening guide
91: water discharge port
100: water intake port
101: tubular member

## Claims

1. An air conditioning device for a vehicle(1) comprising: a blower unit(2) which houses a blower(21) in the inside of a scroll casing(23); and an air conditioning unit(3) which houses a heat exchanger (33) in the inside of an air conditioning casing(31), the scroll casing(23) having an air blowoff port (60) through which air supplied from the blower is blown off, and the air conditioning casing(31) having an air intake port(50) through which air blown off from the blower unit(2) is taken into the air conditioning casing(31), **characterized in that**
the air blowoff port(60) is opened toward an air conditioning casing side,
the air intake port(50) is opened toward an upper side of the vehicle, and
the air intake port (50) and the air blowoff port (60) are connected to each other by a duct(70).

2. The air conditioning device for a vehicle(1) according to claim 1, **characterized in that** a lower end of the air blowoff port(60) is disposed more downward in the vertical direction of the vehicle than the air intake port(50).

3. The air conditioning device for a vehicle(1) according to claim 1 or claim 2, **characterized in that** the duct (70) includes:
a blower unit side connecting portion(71) which is connected to the air blowoff port(60);
an air conditioning device side connecting portion(72) which is connected to the air intake port(50); and
an air flow direction changing portion(74) which is arranged between the blower unit side connecting portion(71) and the air conditioning device side connecting portion(72), wherein
the air flow direction changing portion(74) includes:
a curved portion(741) formed of a curved cylindrical body; and
a flow straightening guide which is arranged in the inside of the curved portion(741).

4. The air conditioning device for a vehicle(1) according to claim 3, **characterized in that** the flow straightening guide includes a first flow straightening guide(742) which extends toward the air conditioning device side connecting portion from a curved outer peripheral side of the curved portion(741).

5. The air conditioning device for a vehicle(1) according to claim 3 or claim 4, **characterized in that** the flow straightening guide has a second flow straightening guide(743) which extends along a bent shape of the curved portion(741).

6. The air conditioning device for a vehicle(1) according to any one of claim 1 to claim 5, **characterized in that** the scroll casing (23) has a water discharge port (91) for discharging water which enters the inside of the scroll casing(23),
the air conditioning casing(31) has a water intake port(100) which takes in water discharged from the water discharge port(91), and
the water intake port (100) is disposed more downward in the vertical direction of the vehicle than the water discharge port(91), and
the water discharge port(91) and the water intake port(100) are connected to each other through a tubular member(101).
